# FASCICULE DE BREVET EUROPEEN

(11) **EP 3 350 003 B1**
(45) Date de publication et mention de la délivrance du brevet: **19.05.2021**
(21) Numéro de dépôt: 16775315.1
(22) Date de dépôt: 14.09.2016
(51) Int. Cl.: B60J 5/10

(54) **HAYON DE VEHICULE AVEC ELEMENT D'INTERFACE RENFORCE**
FAHRZEUGHECKKLAPPE MIT VERSTÄRKTEM SCHNITTSTELLENELEMENT
VEHICLE TAILGATE COMPRISING A REINFORCED INTERFACE ELEMENT

(30) Priorité: 14.09.2015 FR 1558523
(43) Date de publication de la demande: 25.07.2018
(73) Titulaire: Compagnie Plastic Omnium, 69007 Lyon (FR)
(72) Inventeur: PORCHEROT, Didier, 69003 Lyon (FR); HACHE, Bertrand, Bloomfield Hills, Michigan 48302 (US)
(74) Mandataire: LLR
(86) Numéro de dépôt international: PCT/FR2016/052319
(87) Numéro de publication internationale: WO 2017/046519

(56) Documents cités:
- DE-A1-102006 050 144
- FR-A1- 2 903 945
- FR-A1- 2 968 631
- FR-A1- 2 981 302

## Description

L'invention concerne les véhicules automobiles et plus particulièrement les hayons en plastique de tels véhicules.

Un hayon de véhicule automobile comprend généralement une vitre et un élément d'interface entre la vitre et une caisse du véhicule. L'élément d'interface permet notamment de renforcer la rigidité du hayon et d'insérer au moins un câble électrique dans le hayon. Habituellement, le hayon comprend en outre un axe de pivotement horizontal autour duquel l'utilisateur le fait pivoter pour l'ouvrir. On connaît également des hayons dont l'axe de pivotement est vertical. Pour ces deux types des hayons, à axe de rotation vertical ou horizontal, on connaît des hayons en une partie ou en deux parties.

Il est connu, notamment sur les véhicules automobiles de petite taille, de fabriquer un hayon qui ne comporte qu'une vitre et un élément d'interface en partie haute, selon une direction verticale lorsque le hayon est en position fermée sur la caisse du véhicule. Cette partie haute comprend des moyens de fixation à la vitre et également des moyens d'articulation sur la caisse définissant l'axe de pivotement horizontal. Ces moyens peuvent par exemple comprendre des parties mobiles de charnières, la caisse du véhicule porte alors les parties fixes des charnières.

Dans la configuration décrite ci-dessus la partie haute peut contenir des câbles électriques dont le point de passage entre le hayon et la caisse se situe au niveau des charnières. De ce fait, si le hayon doit porter les feux du véhicule, ces derniers ne peuvent être positionnés que dans la partie supérieure, ce qui n'est pas compatible avec toutes les réglementations et impose de fortes contraintes esthétiques. Et même en fixant une partie basse de hayon dans la vitre, on ne pourrait pas relier électriquement le hayon aux feux du véhicule de façon simple. En outre, la rigidité du hayon et la résistance mécanique de ce dernier sont essentiellement assurées par la vitre. Ainsi, l'ensemble comprenant la vitre et le hayon présente une relative fragilité.

Le document FR 2 903 945 A1 décrit un hayon de véhicule selon le préambule de la revendication 1.

Un but de l'invention est de fournir un hayon de véhicule comprenant un axe de pivotement qu'on peut facilement connecter électriquement à des équipements électriques situés en partie basse du hayon, notamment plus bas que la vitre, tels que l'essuie-glace, la serrure ou les feux arrières tout en améliorant la rigidité de l'ensemble.

À cet effet, on prévoit selon l'invention un hayon de véhicule selon la revendication 1.

Ainsi, grâce aux moyens adaptés pour permettre le passage d'au moins un câble électrique, on peut disposer des câbles électriques dans l'élément d'interface qui entoure la vitre et ainsi atteindre facilement toutes les parties du hayon. On peut aisément relier électriquement le système d'essuie-glace à la caisse par exemple. En outre, grâce à la présence de la partie centrale de rigidification, la vitre est protégée mécaniquement. En effet, la vitre est entourée par la partie haute, la partie basse et la partie centrale de l'élément d'interface. Elle subit donc moins de contraintes mécaniques directes, notamment lors des manoeuvres d'ouverture/fermeture, contraintes dont une partie est reprise par ces éléments d'interface.

Selon un mode de réalisation, la partie haute comporte les moyens d'articulation sur la caisse définissant l'axe de pivotement horizontal.

Selon un mode de réalisation, la partie basse comprend les moyens de verrouillage du hayon en position fermée.

Selon un mode de réalisation, les moyens adaptés pour permettre le passage d'au moins un câble électrique comprennent au moins un canal ménagé dans la partie centrale de rigidification.

Selon un mode de réalisation particulier, les moyens de solidarisation de l'élément d'interface à la vitre sont agencés de manière que la partie centrale subit un champ de contraintes non nul, représentant une partie des efforts que subirait la vitre en l'absence de cette partie centrale. En d'autres termes, on diminue les contraintes mécaniques que subit la vitre.

Selon l'invention, la partie centrale est positionnée sur une face extérieure de la vitre et donc située à l'extérieur du véhicule.

L'étanchéité du véhicule en interface du hayon est alors assurée par un joint d'étanchéité positionné entre une face intérieure de la vitre et la caisse.

Selon un mode de réalisation, les moyens de solidarisation de la partie centrale à la vitre et les moyens de fixation des parties haute et basse à la vitre comportent des orifices sur la vitre à travers desquels passent des vis coopérant avec des orifices sur les parties haute, basse et centrale.

Selon un autre mode de réalisation, les moyens de solidarisation de la partie centrale à la vitre et les moyens de fixation des parties haute et basse à la vitre comportent des goujons collés sur la vitre coopérant avec des orifices sur les parties haute, basse et centrale. Les goujons peuvent être filetés, ou configurés pour permettre le clipage d'un moyen de verrouillage.

Selon un mode de réalisation, les moyens de solidarisation de la partie centrale à la vitre et les moyens de fixation des parties haute et basse à la vitre sont au moins partiellement confondus.

Le montage du hayon est ainsi plus facile.

Avantageusement, la partie centrale comprend deux organes longilignes, ou montants, disposés de part et d'autre de la vitre, selon une direction verticale lorsque le hayon est en position fermée sur la caisse du véhicule, les organes relient de préférence les parties haute et basse de l'élément d'interface.

L'encombrement généré par la partie centrale est ainsi réduit.

Selon un mode de réalisation, les organes longilignes ont une forme générale adaptée pour enserrer au moins un bord de la vitre.

De cette façon, lors de l'assemblage du hayon, les organes sont prépositionnés par rapport la vitre. En outre, cet agencement facilite la transmission d'effort entre la vitre et les organes afin d'améliorer la rigidité globale du hayon.

Avantageusement, les moyens de fixation entre la partie haute et la vitre comprennent au moins deux points de fixation, de préférence des goujons.

Selon un mode de réalisation, les moyens de fixation entre la partie basse et la vitre comprennent au moins deux points de fixation et de préférence deux goujons.

Le hayon est ainsi mécaniquement plus rigide.

De préférence, au moins un câble électrique s'étend depuis la partie haute jusqu'à la partie basse en passant par la partie centrale de l'élément d'interface.

Avantageusement, un joint d'étanchéité est positionné entre la vitre et la partie basse de l'élément d'interface.

On améliore ainsi l'étanchéité entre le hayon et la caisse.

Selon un mode de réalisation, l'élément d'interface comprend au moins un organe formant panneau de carrosserie, et de préférence déflecteur d'air, positionné sur au moins l'une quelconque des parties suivantes :
- la partie centrale,
- la partie haute,
- la partie basse.

De cette façon, lorsque l'organe forme déflecteur, on améliore les propriétés aérodynamiques du hayon.

De préférence, au moins l'une des parties haute et basse est conformée en caisson, de préférence nervuré.

On rappelle qu'un caisson est un organe comprenant au moins une partie creuse. Ainsi, le caisson est plus léger et comprend en outre des logements. Ces logements peuvent notamment servir à loger des câbles électriques.

Avantageusement, au moins l'une des parties haute et basse est conformée pour enserrer le bord de la vitre.

La fabrication du hayon est alors plus simple car il est possible de prépositionner la vitre par rapport à la partie haute ou à la partie basse. De plus, les parties haute et basse transmettent ainsi mieux les efforts subis par le hayon, ce qui permet d'améliorer la rigidité globale du hayon.

On prévoit également selon l'invention un véhicule comprenant au moins un hayon tel que précédemment décrit.

On prévoit enfin selon l'invention un procédé de fabrication d'un hayon de véhicule caractérisé en ce qu'il comprend les étapes suivantes :
- on dispose un joint d'étanchéité sur une face extérieure d'une vitre et à proximité de son bord inférieur,
- on positionne une partie haute d'un élément d'interface d'une vitre sur une vitre du hayon au moyen d'au moins une vis ou un goujon,
- on positionne une partie basse de l'élément d'interface sur la vitre au moyen d'au moins une vis ou un goujon,
- on positionne une partie centrale de l'élément d'interface par rapport à la vitre et aux parties haute et basse de l'élément d'interface, la partie centrale comprend deux organes longilignes distincts des parties haute et basse.

On va maintenant décrire, à titre d'exemple non limitatif, un mode de réalisation de l'invention à l'aide des figures suivantes, représentant toutes des vues en perspective :
- la figure 1 montre un exemple de hayon selon l'invention, du type à axe de pivotement horizontal,
- la figure 2 est une vue éclatée de ce hayon,
- la figure 3 montre une vitre pour le hayon,
- la figure 4 représente la vitre, une partie haute et une partie basse d'un élément d'interface du hayon,
- la figure 5 montre la vitre et une partie centrale de l'élément d'interface du hayon,
- la figure 6 représente la vitre et l'élément d'interface,
- la figure 7 montre la vitre et l'élément d'interface partiellement équipés de panneaux de carrosserie, formant ici des déflecteurs aérodynamiques, selon l'invention, et
- la figure 8 illustre des moyens de fixation à la vitre au moyen de goujons.

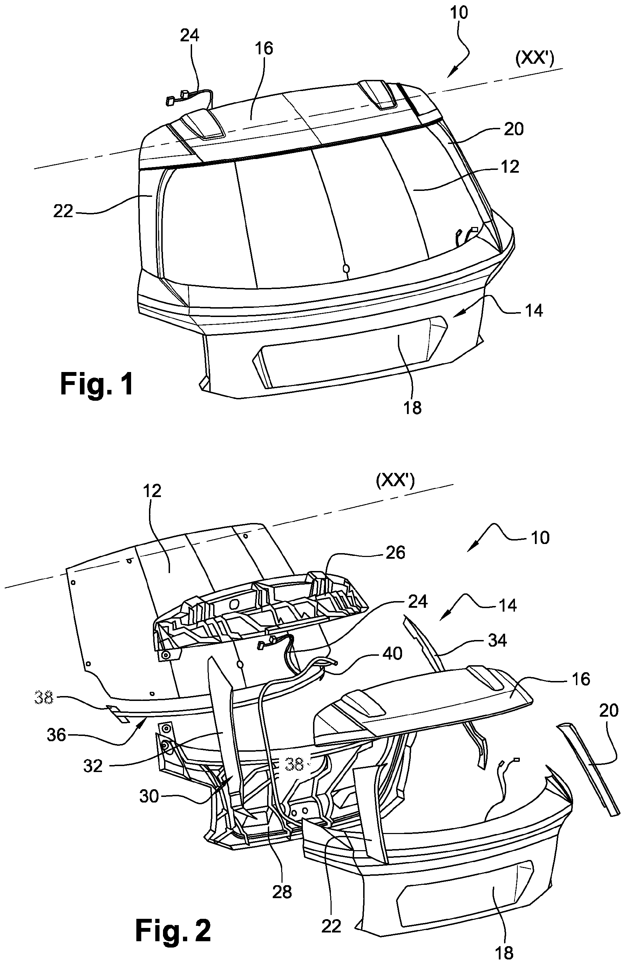

On a représenté à la figure 1 un exemple de hayon 10 de véhicule automobile selon l'invention. Selon cet exemple, le hayon 10 comprend un axe de pivotement horizontal (XX') autour duquel le hayon 10 peut passer d'une position fermée à une position ouverte et vice versa. En outre, il comporte une vitre 12 qui comprend du verre et/ou un matériau plastique.

Le hayon 10 comprend également un élément d'interface 14, que l'on décrira en détail ci-après, entre la vitre 12 et la caisse du véhicule. L'élément d'interface 14 comporte quatre organes formant déflecteurs 16, 18 20 et 22. Ces organes améliorent les propriétés aérodynamiques du hayon 10. Selon une variante du présent mode de réalisation, les organes 16, 18, 20 et 22 de l'élément d'interface 14 ne sont pas destinés à améliorer les propriétés aérodynamiques du hayon 10. Ils ont pour fonction la protection du hayon 10 ainsi qu'une fonction esthétique. Selon d'autres modes, seul au moins l'un parmi les quatre organes 16, 18, 20, 22 forme un déflecteur.

Le hayon 10 comporte également un faisceau de câbles électriques 24 reliant la caisse au hayon 10.

En référence à la figure 2, on va décrire plus en détail le hayon 10. L'élément d'interface 14 de la vitre 12 avec la caisse du véhicule comprend une partie haute 26, selon une direction verticale lorsque le hayon est en position fermée sur la caisse du véhicule, une partie basse 28 selon la même direction verticale et une partie centrale 30 de rigidification.

La partie haute 26 est conformée en caisson, de préférence nervuré, elle a une forme générale creuse. Elle comporte des moyens d'articulation (non représentés) sur la caisse de façon à définir l'axe de pivotement (XX'). Ces moyens peuvent être par exemple des parties mobiles de charnières complémentaires de parties fixes de ces charnières positionnées sur la caisse du véhicule.

La partie basse 28 est aussi conformée en caisson, de préférence nervuré. De façon connue en soi, la partie basse 28 comporte des moyens de verrouillage du hayon 10 en position fermée tels qu'un crochet ou une serrure.

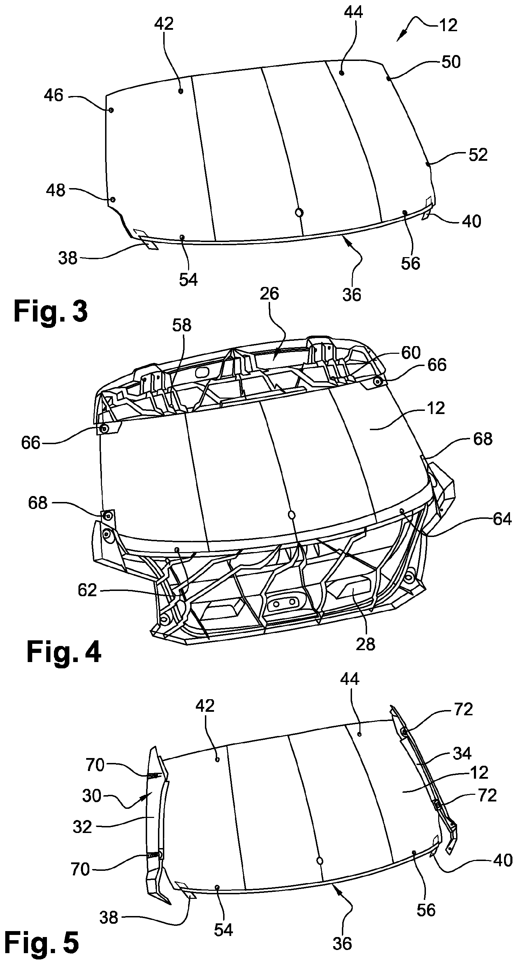

Les parties haute 26 et basse 28 sont conformées pour emboîter la vitre 12. Selon des variantes du présent mode de réalisation, seule la partie haute 26 ou seule la partie basse 28 est ainsi conformée. En outre, comme on le voit notamment sur la figure 4, les parties haute 26 et basse 28 sont conformées pour jouxter la vitre 12 en recouvrant partiellement une face extérieure de la vitre 12, par rapport à l'intérieur et à l'extérieur du véhicule.

Le faisceau de câbles électriques 24 s'étend depuis la partie haute 26 jusqu'à la partie basse 28 en passant dans la partie centrale 30 de rigidification. Ce faisceau 24 comprend au moins un câble électrique.

Selon l'invention, la partie centrale 30 de rigidification comporte deux organes longilignes 32, 34 disposés de part et d'autre de la vitre selon une direction verticale lorsque le hayon (10) est en position fermée sur la caisse du véhicule, c'est-à-dire sur cette figure, à droite et à gauche de la vitre 12. Les organes 32, 34 forment ici des montants latéraux de l'élément d'interface 14. Ces montants ont été formés par injection. Comme on peut le voir sur la figure 5, les deux organes 32, 34 sont agencés pour être positionnés sur la face extérieure de la vitre 12 et donc à l'extérieur du véhicule. En outre, chaque organe 32, 34 a une forme adaptée pour enserrer le bord latéral de la vitre 12. Pour ce faire, ils comprennent, le long de leur axe longitudinal une paroi et un rebord complémentaires délimitant un espace sensiblement de l'épaisseur de la vitre 12 de sorte que l'interface de contact avec la vitre 12 s'étend sur les deux faces de cette dernière.

Selon une variante du présent mode de réalisation, les deux organes longilignes 32, 34 n'ont pas une forme générale adaptée pour enserrer la vitre 12. Ils peuvent par exemple avoir une interface de contact avec la vitre 12 sur une seule face de cette dernière.

De plus, dans un plan perpendiculaire à un axe longitudinal d'un organe 32 ou 34, ce dernier peut présenter, selon des variantes du présent mode de réalisation, une forme générale concave de « U », de « V » ou de « C ».

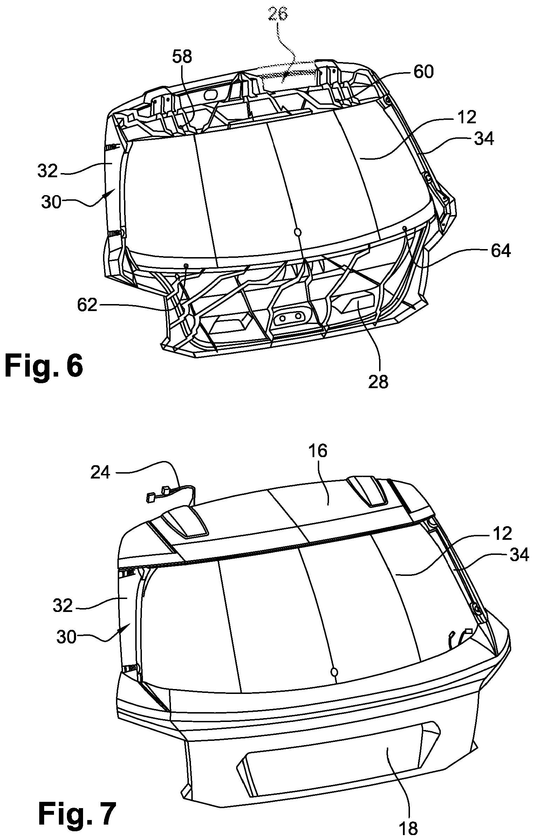

Comme on le voit la figure 6, les organes 32, 34 relient directement les parties haute 26 et basse 28 de l'élément d'interface 14.

En outre, les montants latéraux 32, 34 comprennent chacun un canal ménagé permettant d'y faire passer au moins un câble électrique allant de la partie haute 26 à la partie basse 28. Ainsi, ces canaux forment des moyens adaptés pour permettre le passage d'au moins un câble électrique.

Le hayon 10 comporte en outre un joint d'étanchéité 36 positionné entre la face extérieure du bord inférieur de la vitre 12 et la partie basse 28. Le joint d'étanchéité 36 a une forme générale longiligne et comprend à ses deux extrémités 38, 40 deux zones surmoulées qui s'étendent selon une direction perpendiculaire à l'axe principal du joint d'étanchéité 36 et qui sont conformées, en faisant un pont transversal de matière à la direction principale du joint, pour assurer une continuité du parcours d'étanchéité avec le joint de caisse du véhicule.

On va maintenant décrire les fixations entre les différents éléments du hayon 10.

Comme on le voit sur la figure 3, la vitre 12 comporte deux orifices 42, 44 disposés à proximité d'un rebord supérieur de la vitre 12, quatre orifices 46, 48, 50, 52 disposés le long des deux rebords latéraux de la vitre 12, et deux orifices 54, 56 disposés à proximité d'un rebord inférieur de la vitre 12. Les deux orifices 46, 48 sont positionnés à proximité d'un rebord latéral et les deux orifices 50, 52 sont positionnés à proximité de l'autre rebord latéral de la vitre 12. Ces orifices sont dimensionnés pour être complémentaires de vis de fixation. Ici, les rebords supérieur, inférieur et latéraux sont identifiés par rapport à la direction verticale telle que précédemment définie.

Comme on le voit sur la figure 4, la partie haute 26 de l'élément d'interface 14 comporte deux orifices 58, 60 positionnés pour être alignés avec les orifices 42, 44 de la vitre 12 lorsque la partie haute 26 est prépositionnée par rapport à la vitre 12. Ainsi, au moyen de deux vis, la partie haute 26 est fixée à la vitre 12.

Ainsi, les orifices 42, 44 de la vitre 12, les orifices 58, 60 de la partie haute 26 et les deux vis s'y logeant forment des moyens de fixation de la partie haute 26 à la vitre 12.

De la même manière, la partie basse 28 comporte deux orifices 62, 64 positionnés pour être alignés avec les orifices 54, 56 de la vitre 12 lorsque la partie basse 28 est prépositionnée par rapport à la vitre 12. Ainsi, au moyen de deux vis, la partie basse 28 est fixée à la vitre 12.

Ainsi, les orifices 54, 56 de la vitre 12, les orifices 62, 64 de la partie basse 28 et les deux vis s'y logeant forment des moyens de fixation de la partie basse 28 à la vitre 12.

En outre, comme on le voit sur la figure 4, les parties haute 26 et basse 28 de l'élément d'interface 14 comprennent respectivement deux orifices 66 et deux orifices 68. Les deux orifices 66 de la partie haute 26 sont positionnés pour être respectivement alignés avec les orifices 46 et 50 de la vitre 12 lorsque la partie haute 26 est prépositionnée par rapport à la vitre 12. De même, les deux orifices 68 de la partie basse 28 sont positionnés pour être respectivement alignés avec les orifices 48 et 52 de la vitre 12 lorsque la partie basse 28 est prépositionnée par rapport à la vitre 12.

De plus, comme on le voit sur la figure 5 les organes longilignes 32, 34 comprennent respectivement deux orifices 70, 72. Les deux orifices 70 de l'organe 32 sont disposés pour être respectivement alignés avec l'un des orifices 46, 48. Les deux orifices 72 de l'organe 34 sont disposés pour être respectivement alignés avec l'un des orifices 50, 52 de la vitre.

Ainsi, au moyen de vis, les éléments longilignes 32, 34 formant la partie centrale de rigidification, les parties haute 26 et basse 28 de l'élément d'interface 14 et la vitre 12 sont positionnés et solidarisés les uns par rapport aux autres.

Ainsi, les orifices 46, 48, 50, 52 de la vitre 12, les orifices 70, 72 de la partie centrale 30 de rigidification et les vis s'y logeant forment des moyens de positionnement et solidarisation de la partie centrale 30 de rigidification et de la vitre 12.

Dans ce mode de réalisation, les moyens de solidarisation de la partie centrale 30 de rigidification à la vitre 12, et les moyens de fixation des parties haute 26 et basse 28 à la vitre 12 sont donc partiellement confondus.

Selon des variantes, ces moyens sont distincts. Dans ce cas, les orifices 46, 48, 50 et 52 de la vitre 12 ne sont alignés qu'avec les orifices 70, 72 des organes longilignes 32, 34. Ainsi, les moyens de fixation entre la partie haute 26 et la vitre 12 comprennent deux points de fixation et optionnellement, deux vis. De même, les moyens de fixation entre la partie basse 28 et la vitre 12 comprennent deux points de fixation et optionnellement deux vis.

De plus, dans l'exemple décrit, qui n'est pas limitatif, les moyens de solidarisation de la partie centrale 30 de rigidification de l'élément d'interface 14 à la vitre 12 sont agencés de manière que la partie centrale 30 reprend une partie significative des efforts supportés par la vitre 12. Ici, cet agencement est tel, qu'en service, la partie centrale 30 de rigidification subit un champ de contraintes Une partie des contraintes mécaniques subies par le hayon est ainsi reprise alors par les éléments d'interface 26, 28 30.

La vitre 12 subit donc moins de contraintes mécaniques. Ainsi, la vitre 12 est protégée des contraintes mécaniques et la rigidité du hayon 10 est renforcée.

On a décrit un mode de réalisation, selon lequel les moyens de fixation de la partie haute 26 à la vitre 12, les moyens de fixation de la partie basse 28 à la vitre 12, et les moyens de positionnement et solidarisation de la partie centrale 30 de rigidification et de la vitre 12, comportent des orifices (42, 44 / 54, 56 / 46, 48, 50, 52) sur la vitre 12 à travers desquels passent des vis coopérant avec des orifices sur les parties haute (58, 60), basse (62, 64) et centrale (70, 72).

On ne sortirait pas du cadre de l'invention, en utilisant tout type de moyens de fixation.

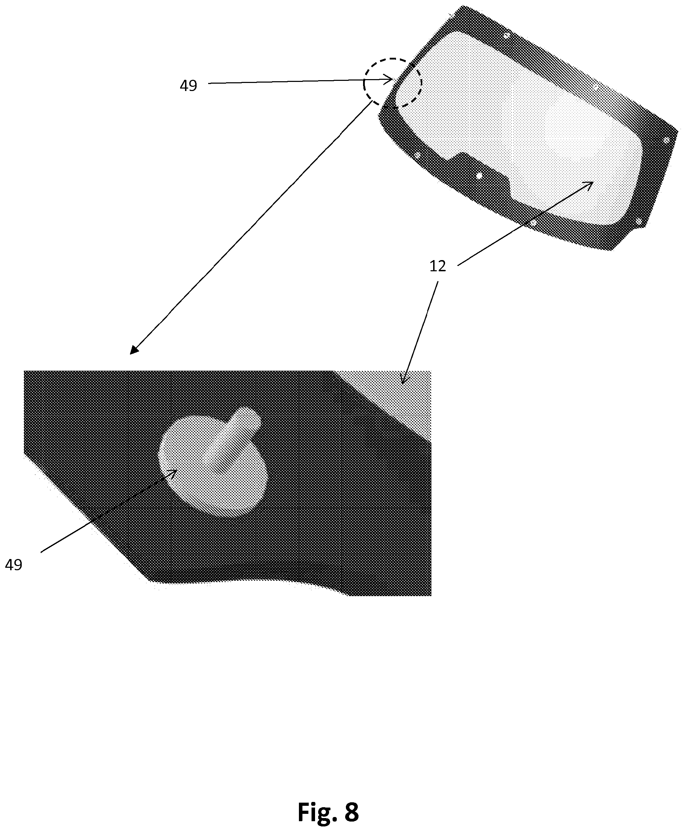

Par exemple, selon un autre mode de réalisation, illustré sur la figure 8, les orifices (42, 44 / 54, 56 / 46, 48, 50, 52) sur la vitre 12 ainsi que les vis les traversant, sont remplacés par des goujons 49 collés sur la surface extérieure de la vitre.

Ces goujons 49 sont de préférence filetés afin de coopérer avec les orifices des parties (26, 28, 30) du hayon à fixer sur la vitre 12. Ces goujons 49 peuvent être associés à des écrous vissés sur leur filetage.

Ces goujons 49 peuvent également être configurés pour permettre la fixation des parties (26, 28, 30) par clipage d'un moyen de verrouillage.

L'utilisation de goujon collé pour remplacer un ensemble orifice/vis permet une fabrication plus facile et moins couteuse. De plus, cette solution permet d'éviter la génération de points de passage d'eau au niveau des orifices de la vitre 12, pouvant engendrer des problèmes d'étanchéité.

On va maintenant décrire le procédé de montage du hayon 10 selon l'invention.

Tout d'abord, en référence à la figure 3, on dispose le joint d'étanchéité 36 sur la face extérieure et à proximité du rebord inférieur de la vitre 12.

Ensuite, en référence à la figure 4, on prépositionne les parties haute 26 et basse 28 de l'élément d'interface 14 par rapport à la vitre 12. Etant donné que ces parties sont conformées pour emboîter la vitre 12, le prépositionnement est facile à produire.

Puis, en référence à la figure 6, on prépositionne la partie centrale 30 par rapport à la vitre 12.

Ensuite, on positionne et on fixe au moyen des goujons (ou des vis) et des orifices décrits ci-dessus la vitre 12, les parties haute 26, basse 28 et centrale 30 de l'élément d'interface 14 entre elles. Cette opération, de fixation peut comporter une opération de vissage de la vis ou d'un goujon avec un élément tel qu'un écrou.

De manière alternative, au lieu de procéder à l'étape de prépositionnement des parties haute 26 et basse 28, on peut, comme on le voit sur la figure 5, commencer par prépositionner la partie centrale 30 de rigidification par rapport à la vitre 12. Etant donné que dans ce mode de réalisation, les deux organes longilignes 32, 34 ont une forme générale adaptée pour enserrer la vitre 12, le prépositionnement est facile à réaliser.

Le prépositionnement s'effectue alors par exemple en faisant reposer la partie centrale 30 par la face extérieure de la vitre 12.

Pour procéder aux opérations de vissages susmentionnées dans le cas d'un assemblage par vis, les parties haute 26 et/ou basse 28 et/ou centrale 30 peuvent comprendre au moins un fût de serrage qui peut être issu de moulage ou surmoulé.

Puis, afin d'améliorer le profil aérodynamique du hayon 10, on positionne sur la partie haute 26 de l'élément d'interface 14 un déflecteur 16 et sur la partie basse 28 de l'élément d'interface 14 un déflecteur 18 comme représenté à la figure 7. Puis, on positionne sur les organes longilignes 32, 34 formant la partie centrale 30 de rigidification de l'élément d'interface 14 respectivement deux déflecteurs 20, 22. On a ainsi fabriqué un hayon 10 tel que représenté à la figure 1.

Selon des variantes du présent mode de réalisation, on ne positionne que le déflecteur 16 sur la partie haute 26 et/ou que le déflecteur 18 sur la partie basse 28 et/ou que les déflecteurs 20, 22 sur la partie centrale de rigidification 30.

Selon une autre variante, l'élément d'interface 14 ne comprend pas de déflecteur.

Selon une autre variante, l'élément d'interface 14 ne comprend pas de déflecteur et les parties haute 26, basse 28 et centrale 30 de l'élément d'interface sont peintes.

Selon une troisième variante, les parties haute 26, basse 28 et centrale 30 de l'élément d'interface 14 porte une simple garniture à des fins esthétiques.

Bien entendu, on pourra apporter à l'invention de nombreuses modifications sans sortir du cadre de celle-ci.

On pourra notamment utiliser différents moyens de fixation des parties de l'élément d'interface 14 à la vitre 12.

On pourra utiliser différents types de déflecteurs.

On pourra également conformer différemment les parties haute 26, basse 28 et centrale 30 formant l'élément d'interface 14.

Par ailleurs, on a décrit un exemple de réalisation, selon lequel le hayon était du type à axe de pivotement horizontal, mais l'invention concerne également des hayons à axe de pivotement sensiblement vertical.

Selon ce mode de réalisation, les moyens d'articulation sur la caisse, définissant l'axe de pivotement vertical, sont situés sur un des côtés du hayon, et l'autre côté comprend les moyens de verrouillage du hayon en position fermée.

L'invention concerne également des hayons en deux parties. Dans ce cas, une partie du hayon s'ouvre avec un axe de rotation vertical (ou horizontal) sur un côté (respectivement en haut) du véhicule, et la seconde partie s'ouvre avec un axe de rotation vertical (respectivement horizontal) sur l'autre côté (respectivement en bas) du véhicule. Chaque partie peut comporter une lunette, au moins un montant, les moyens d'articulation sur la caisse définissant l'axe de pivotement vertical (respectivement horizontal), et les moyens de verrouillage du hayon (10) en position fermée.

## Revendications

1. Hayon (10) de véhicule comprenant un axe de pivotement horizontal ou sensiblement vertical, des moyens d'articulation sur la caisse définissant l'axe de pivotement (XX') et des moyens de verrouillage du hayon (10) en position fermée, comprenant au moins une vitre (12) et un élément d'interface (14) de la vitre (12) avec une caisse du véhicule, l'élément d'interface (14) est réalisé par moulage et comprend :
- une partie haute (26), selon une direction verticale lorsque le hayon (10) est en position fermée sur la caisse du véhicule, la partie haute (26) comporte des moyens de fixation (58, 60, 49) à la vitre (12) ;
- une partie basse (28), selon la même direction verticale ; et
- une partie centrale (30) de rigidification, positionnée sur une face extérieure de la vitre (12) par rapport à l'intérieur et à l'extérieur du véhicule, et qui comprend des moyens de solidarisation (68, 49) à la vitre (12), les moyens de solidarisation (68) sont agencés de manière que la partie centrale (30) reprend une partie significative des efforts supportés par la vitre (12), la partie centrale de rigidification comprend en outre des moyens adaptés pour permettre le passage d'au moins un câble électrique allant de la partie haute (26) à la partie basse (28), **caractérisé en ce que** la partie basse (28) comprend des moyens de fixation (62, 64, 49) à la vitre (12) et **en ce que** la partie centrale (30) comprend deux organes (32, 34) longilignes distincts des parties haute (26) et basse (28).

2. Hayon (10) selon la revendication 1, dans lequel la partie haute (26) comporte les moyens d'articulation sur la caisse définissant un axe de pivotement horizontal (XX').

3. Hayon (10) selon l'une quelconque des revendications précédentes, dans lequel la partie basse (28) comprend les moyens de verrouillage du hayon (10) en position fermée.

4. Hayon (10) selon l'une quelconque des revendications précédentes, dans lequel les moyens adaptés pour permettre le passage d'au moins un câble électrique comprennent au moins un canal ménagé dans la partie centrale (30) de rigidification.

5. Hayon (10) selon l'une quelconque des revendications précédentes, dans lequel les moyens de solidarisation (68) de l'élément d'interface (26, 28, 30) à la vitre (12) sont agencés de manière que la partie centrale (30) subit un champ de contraintes dont une norme est supérieure à une norme d'un champ de contraintes que subit la vitre (12).

6. Hayon (10) selon l'une quelconque des revendications précédentes, dans lequel les moyens de solidarisation (68, 49) de la partie centrale (30) à la vitre (12) et les moyens de fixation (58, 60, 62, 64, 49) des parties haute (26) et basse (28) à la vitre (12) comportent des orifices (42, 44 / 54, 56 / 46, 48, 50, 52) sur la vitre (12) à travers desquels passent des vis coopérant avec des orifices sur les parties haute (58, 60), basse (62, 64) et centrale (70, 72).

7. Hayon (10) selon l'une quelconque des revendications précédentes, dans lequel les moyens de solidarisation (68, 49) de la partie centrale (30) à la vitre (12) et les moyens de fixation (58, 60, 62, 64, 49) des parties haute (26) et basse (28) à la vitre (12) comportent des goujons (49) collés sur la vitre (12) coopérant avec des orifices sur les parties haute (58, 60), basse (62, 64) et centrale (70, 72).

8. Hayon (10) selon la revendication précédente, dans lequel les goujons (49) sont filetés, ou sont configurés pour permettre le clipage d'un moyen de verrouillage.

9. Hayon (10) selon l'une quelconque des revendications précédentes, dans lequel les moyens de solidarisation (68, 49) de la partie centrale (30) à la vitre (12) et les moyens de fixation (58, 60, 62, 64, 49)) des parties haute (26) et basse (28) à la vitre (12) sont au moins partiellement confondus.

10. Hayon (10) selon l'une quelconque des revendications précédentes, dans lequel les deux organes (32, 34) longilignes, ou montants, sont disposés de part et d'autre de la vitre (12), selon une direction verticale lorsque le hayon (10) est en position fermée sur la caisse du véhicule, les organes (32, 34) relient de préférence les parties haute (26) et basse (28) de l'élément d'interface (14).

11. Hayon (10) selon la revendication précédente, dans lequel les organes (32, 34) longilignes ont une forme générale adaptée pour enserrer au moins un bord de la vitre (12).

12. Hayon (10) selon l'une quelconque des revendications précédentes, dans lequel les moyens de fixation (58, 60) entre la partie haute (26) et la vitre (12) comprennent au moins deux points de fixation (58, 60).

13. Hayon (10) selon l'une quelconque des revendications précédentes, dans lequel les moyens de fixation (62, 64) entre la partie basse et la vitre (12) comprennent au moins deux points de fixation (62, 64).

14. Hayon (10) selon l'une quelconque des revendications précédentes, dans lequel au moins un câble électrique (24) s'étend depuis la partie haute (26) jusqu'à la partie basse (28) en passant par la partie centrale (30) de l'élément d'interface (14).

15. Hayon (10) selon l'une quelconque des revendications précédentes, dans lequel un joint d'étanchéité (36) est positionné entre la vitre (12) et la partie basse (28) de l'élément d'interface (14).

16. Hayon (10) selon l'une quelconque des revendications précédentes, dans lequel l'élément d'interface (14) comprend au moins un organe (16, 18, 20, 22) formant panneau de carrosserie, et de préférence déflecteur, positionné sur au moins l'une quelconque des parties suivantes :
- la partie centrale (30),
- la partie haute (26),
- la partie basse (28).

17. Hayon (10) selon l'une quelconque des revendications précédentes, dans lequel au moins l'une des parties haute (26) et basse (28) est conformée en caisson, de préférence nervuré

18. Hayon (10) selon l'une quelconque des revendications précédentes, dans lequel au moins l'une des parties haute (26) et basse (28) est conformée pour emboîter la vitre (12).

19. Procédé de fabrication d'un hayon (10) de véhicule selon l'une quelconque des revendications 1-18, **caractérisé en ce qu'**il comprend les étapes suivantes :
- on dispose un joint d'étanchéité (36) sur une face extérieure de la vitre (12) et à proximité de son bord inférieur
- on positionne une partie haute (26) d'un élément d'interface (14) d'une vitre (12) sur la vitre (12) au moyen d'au moins une vis ou un goujon,
- on positionne une partie basse (28) de l'élément d'interface (14) sur la vitre (12) au moyen d'au moins une vis ou un goujon,
- on positionne une partie centrale (30) de l'élément d'interface (14) par rapport à la vitre (12) et aux parties haute (26) et basse (28) de l'élément d'interface (14), la partie centrale comprend deux organes longilignes distincts des parties haute (26) et basse (28).

## Patentansprüche

1. Fahrzeug-Heckklappe (10), aufweisend eine horizontale oder im Wesentlichen vertikale Schwenkachse, Gelenkmittel an der Karosserie, die die Schwenkachse (XX') definiert, und eine Einrichtung zum Verriegeln der Heckklappe (10) in einer geschlossenen Position, aufweisend wenigstens eine Scheibe (12) und ein Schnittstellenelement (14) zum Verbinden der Scheibe (12) mit einer Karosserie des Fahrzeugs, wobei das Schnittstellenelement (14) durch Gießen hergestellt ist und aufweist:
- einen oberen Teil (26) in vertikaler Richtung, wenn sich die Heckklappe (10) in einer geschlossenen Position an der Fahrzeugkarosserie befindet, wobei der obere Teil (26) Mittel (58, 60, 49) zur Befestigung an der Scheibe (12) aufweist;
- einen unteren Teil (28), in der gleichen vertikalen Richtung; und
- einen mittleren Versteifungsteil (30), der an einer Außenfläche der Scheibe (12) in Bezug auf die Innen- und Außenseite des Fahrzeugs positioniert ist und der Mittel (68, 49) zur Befestigung an der Scheibe (12) aufweist, wobei die Mittel (68, 49) zur Befestigung (68) so angeordnet sind, dass der mittlere Teil (30) einen wesentlichen Teil der Kräfte aufnimmt, die durch die Scheibe (12) getragen werden, wobei der mittlere Versteifungsteil außerdem Mittel aufweist, die eingerichtet sind, den Durchgang mindestens eines elektrischen Kabels von dem oberen Teil (26) zu dem unteren Teil (28) zu ermöglichen, **dadurch gekennzeichnet, dass** das untere Teil (28) Mittel (62, 64, 49) zur Befestigung an der Scheibe (12) aufweist und dass das mittlere Teil (30) zwei längliche Elemente (32, 34) aufweist, die sich von dem oberen (26) und dem unteren (28) Teil unterscheiden.

2. Heckklappe (10) nach Anspruch 1, wobei der obere Teil (26) Gelenkmittel an der Karosserie aufweist, die eine horizontale Schwenkachse (XX') definieren.

3. Heckklappe (10) nach einem der vorhergehenden Ansprüche, wobei der untere Teil (28) Mittel zum Verriegeln der Heckklappe (10) in der geschlossenen Position aufweist.

4. Heckklappe (10) nach einem der vorhergehenden Ansprüche, wobei die Mittel, die eingerichtet sind, den Durchgang mindestens eines elektrischen Kabels zu ermöglichen, mindestens einen in dem mittleren Versteifungsteil (30) vorgesehenen Kanal aufweisen.

5. Heckklappe (10) nach einem der vorhergehenden Ansprüche, wobei die Mittel zur Befestigung (68) des Schnittstellenelements (26, 28, 30) an der Scheibe (12) so angeordnet sind, dass der mittlere Teil (30) einem Spannungsfeld ausgesetzt ist, dessen Norm höher ist als eine Norm eines Spannungsfeldes, dem die Scheibe (12) ausgesetzt ist.

6. Heckklappe (10) nach einem der vorhergehenden Ansprüche, wobei die Mittel zur Befestigung (68, 49) des mittleren Teils (30) an der Scheibe (12) und die Mittel zur Befestigung (58, 60, 62, 64), 49) der oberen (26) und unteren (28) Teile an der Scheibe (12) Öffnungen (42, 44 / 54, 56 / 46, 48, 50, 52) an der Scheibe (12) aufweisen, durch die Schrauben hindurchgehen, die mit Öffnungen an den oberen (58, 60), unteren (62, 64) und mittleren (70, 72) Teilen zusammenwirken.

7. Heckklappe (10) nach einem der vorhergehenden Ansprüche, wobei die Mittel (68, 49) zur Befestigung (68, 49) des mittleren Teils (30) an der Scheibe (12) und die Mittel zur Befestigung (58, 60, 62, 64, 49) des oberen (26) und unteren (28) Teils an der Scheibe (12) Stifte (49) aufweisen, die auf die Scheibe (12) geklebt sind und mit Öffnungen am oberen (58, 60), unteren (62, 64) und mittleren (70, 72) Teil zusammenwirken.

8. Heckklappe (10) nach dem vorhergehenden Anspruch, wobei die Zapfen (49) mit einem Gewinde versehen sind oder so ausgebildet sind, dass sie das Einklipsen eines Sicherungsmittels ermöglichen.

9. Heckklappe (10) nach einem der vorhergehenden Ansprüche, wobei die Mittel zur Befestigung (68, 49) des mittleren Teils (30) an der Scheibe (12) und die Mittel zur Befestigung (58, 60, 62, 64, 49) des oberen (26) und des unteren (28) Teils an der Scheibe (12) zumindest teilweise verwechselt sind.

10. Heckklappe (10) nach einem der vorhergehenden Ansprüche, wobei die beiden länglichen Elemente (32, 34) oder Säulen auf beiden Seiten der Scheibe (12) in vertikaler Richtung angeordnet sind, wenn sich die Heckklappe (10) in einer geschlossenen Position an der Fahrzeugkarosserie befindet, wobei die Elemente (32, 34) vorzugsweise den oberen (26) und unteren (28) Teil des Schnittstellenelements (14) verbinden.

11. Heckklappe (10) nach dem vorhergehenden Anspruch, wobei die länglichen Elemente (32, 34) eine allgemeine Form haben, die so ausgestaltet ist, dass sie mindestens einen Rand der Scheibe (12) umschließt.

12. Heckklappe (10) nach einem der vorhergehenden Ansprüche, wobei die Befestigungsmittel (58, 60) zwischen dem oberen Teil (26) und der Scheibe (12) mindestens zwei Befestigungspunkte (58, 60) aufweisen.

13. Heckklappe (10) nach einem der vorhergehenden Ansprüche, wobei die Befestigungsmittel (62, 64) zwischen dem unteren Teil und der Scheibe (12) mindestens zwei Befestigungspunkte (62, 64) aufweisen.

14. Heckklappe (10) nach einem der vorangehenden Ansprüche, wobei sich mindestens ein elektrisches Kabel (24) von dem oberen Teil (26) zu dem unteren Teil (28) durch den mittleren Teil (30) des Schnittstellenelements (14) erstreckt.

15. Heckklappe (10) nach einem der vorhergehenden Ansprüche, wobei eine Dichtung (36) zwischen der Scheibe (12) und dem unteren Teil (28) des Schnittstellenelements (14) angeordnet ist.

16. Heckklappe (10) nach einem der vorhergehenden Ansprüche, wobei das Schnittstellenelement (14) mindestens ein Karosserieplattenelement (16, 18, 20, 22), vorzugsweise einen Deflektor, aufweist, das an mindestens einem der folgenden Teile positioniert ist:
- dem mittleren Teil (30),
- dem oberen Teil (26),
- dem unteren Teil (28).

17. Heckklappe (10) nach einem der vorhergehenden Ansprüche, wobei mindestens eines der oberen (26) und unteren (28) Teile kastenförmig, vorzugsweise gerippt, ausgebildet ist.

18. Heckklappe (10) nach einem der vorhergehenden Ansprüche, wobei mindestens einer der oberen (26) und unteren (28) Teile so geformt ist, dass er an die Scheibe (12) passt.

19. Verfahren zur Herstellung einer Fahrzeug-Heckklappe (10) nach einem der Ansprüche 1-18, **dadurch gekennzeichnet, dass** es die folgenden Schritte aufweist:
- Anordnen einer Dichtung (36) an einer Außenseite der Scheibe (12) und in der Nähe ihrer Unterkante,
- Positionieren eines oberen Teils (26) eines Schnittstellenelements (14) einer Scheibe (12) mittels mindestens einer Schraube oder eines Zapfens auf der Scheibe (12),
- Positionieren eines unteren Teils (28) des Schnittstellenelements (14) mittels mindestens einer Schraube oder eines Bolzens an der Scheibe (12),
- Positionieren eines mittleren Teils (30) des Schnittstellenelements (14) in Bezug auf die Scheibe (12) und den oberen (26) und unteren (28) Teil des Schnittstellenelements (14), wobei der mittlere Teil zwei längliche Elemente aufweist, die sich von dem oberen (26) und unteren (28) Teil unterscheiden.

## Claims

1. Tailgate (10) of a vehicle, comprising a horizontal or substantially vertical pivot axis, means for hinging to the body which define the pivot axis (XX'), and means for locking the tailgate (10) in the closed position, said tailgate also comprising at least one window (12) and an interface element (14) between the window (12) and a vehicle body, the interface element (14) being produced by molding and comprising:
- an upper part (26) in a vertical direction when the tailgate (10) is in the closed position on the vehicle body, the upper part (26) including means (58, 60, 49) for fastening to the window (12);
- a lower part (28) in the same vertical direction; and
- a central stiffening part (30) which is positioned on an exterior face of the window (12) relative to the interior and exterior of the vehicle and comprises means (68, 49) for securing to the window (12), the securing means (68) being arranged such that the central part (30) absorbs a significant amount of the forces borne by the window (12), and the central stiffening part further comprising means suitable for allowing at least one electrical cable running from the upper part (26) to the lower part (28) to pass through, **characterized in that** the lower part (28) comprises means (62, 64, 49) for fastening to the window (12) and **in that** the central part (30) comprises two elongate members (32, 34) which are separate from the upper (26) and lower (28) parts.

2. Tailgate (10) according to claim 1, wherein the upper part (26) includes the means for hinging to the body which define a horizontal pivot axis (XX').

3. Tailgate (10) according to either of the preceding claims, wherein the lower part (28) comprises the means for locking the tailgate (10) in the closed position.

4. Tailgate (10) according to any of the preceding claims, wherein the means suitable for allowing at least one electrical cable to pass through comprise at least one channel formed in the central stiffening part (30).

5. Tailgate (10) according to any of the preceding claims, wherein the means (68) for securing the interface element (26, 28, 30) to the window (12) are arranged such that the central part (30) is subjected to a stress field of which a norm is greater than a norm of a stress field to which the window (12) is subjected.

6. Tailgate (10) according to any of the preceding claims, wherein the means (68, 49) for securing the central part (30) to the window (12) and the means (58, 60, 62, 64, 49) for fastening the upper (26) and lower (28) parts to the window (12) include openings (42, 44/54, 56/46, 48, 50, 52) on the window (12) through which screws that interact with openings on the upper (58, 60), lower (62, 64), and central (70, 72) parts pass.

7. Tailgate (10) according to any of the preceding claims, wherein the means (68, 49) for securing the central part (30) to the window (12) and the means (58, 60, 62, 64, 49) for fastening the upper (26) and lower (28) parts to the window (12) include studs (49) which are adhered to the window (12) and interact with openings on the upper (58, 60), lower (62, 64), and central (70, 72) parts.

8. Tailgate (10) according to the preceding claim, wherein the studs (49) are threaded, or are designed to allow a locking means to be clipped on.

9. Tailgate (10) according to any of the preceding claims, wherein the means (68, 49) for securing the central part (30) to the window (12) and the means (58, 60, 62, 64, 49) for fastening the upper (26) and lower (28) parts to the window (12) are at least partially coincident.

10. Tailgate (10) according to any of the preceding claims, wherein the two elongate members (32, 34), or uprights, are arranged on either side of the window (12) in a vertical direction when the tailgate (10) is in the closed position on the vehicle body, the members (32, 34) preferably connecting the upper (26) and lower (28) parts of the interface element (14).

11. Tailgate (10) according to the preceding claim, wherein the elongate members (32, 34) have a shape that is generally suitable for gripping at least one edge of the window (12).

12. Tailgate (10) according to any of the preceding claims, wherein the fastening means (58, 60) between the upper part (26) and the window (12) comprise at least two fastening points (58, 60).

13. Tailgate (10) according to any of the preceding claims, wherein the fastening means (62, 64) between the lower part and the window (12) comprise at least two fastening points (62, 64).

14. Tailgate (10) according to any of the preceding claims, wherein at least one electrical cable (24) extends from the upper part (26) to the lower part (28), passing through the central part (30) of the interface element (14).

15. Tailgate (10) according to any of the preceding claims, wherein a seal (36) is positioned between the window (12) and the lower part (28) of the interface element (14).

16. Tailgate (10) according to any of the preceding claims, wherein the interface element (14) comprises at least one member (16, 18, 20, 22) which forms a body panel, preferably a deflecting body panel, and is positioned on at least one of the following parts:
- the central part (30),
- the upper part (26),
- the lower part (28).

17. Tailgate (10) according to any of the preceding claims, wherein at least one of the upper (26) and lower (28) parts is in the shape of a compartment, preferably ribbed.

18. Tailgate (10) according to any of the preceding claims, wherein at least one of the upper (26) and lower (28) parts is shaped to fit the window (12).

19. Method for manufacturing a tailgate (10) for a vehicle according to any of claims 1-18, **characterized in that** it comprises the following steps:
- arranging a seal (36) on an exterior face of the window (12) and near the lower edge thereof
- arranging an upper part (26) of an interface element (14) of a window (12) on the window (12) by means of at least one screw or stud,
- arranging a lower part (28) of the interface element (14) on the window (12) by means of at least one screw or stud,
- arranging a central part (30) of the interface element (14) relative to the window (12) and to the upper (26) and lower (28) parts of the interface element (14), the central part comprising two elongate members which are separate from the upper (26) and lower (28) parts.
